# EUROPEAN PATENT SPECIFICATION

(11) **EP 3 159 613 B1**
(45) Date of publication and mention of the grant of the patent: **02.10.2019**
(21) Application number: 14894951.4
(22) Date of filing: 20.06.2014
(51) Int. Cl.: F24D 3/00, F24D 19/10, F24D 3/18, F25B 49/02, F25B 30/02

(54) **HEAT PUMP HEATING SYSTEM**
WÄRMEPUMPENHEIZSYSTEM
SYSTÈME DE CHAUFFAGE À POMPE À CHALEUR

(43) Date of publication of application: 26.04.2017
(73) Proprietor: Mitsubishi Electric Corporation, Chiyoda-ku Tokyo 100-8310 (JP)
(72) Inventor: SAKUMA, Toshiyuki, Tokyo 100-8310 (JP); AKAGI, Satoshi, Tokyo 100-8310 (JP); MATSUMURA, Yasunari, Tokyo 100-8310 (JP); WATANABE, Naoki, Tokyo 100-8310 (JP); SHIBAZAKI, Naoki, Tokyo 100-8310 (JP)
(74) Representative: Pfenning, Meinig & Partner mbB
(86) International application number: PCT/JP2014/066449
(87) International publication number: WO 2015/194038

(56) References cited:
- EP-A1- 2 615 384
- WO-A1-2012/032787
- DE-A1- 3 423 262
- JP-A- S63 210 535
- JP-A- 2009 287 895
- JP-A- 2009 287 895

## Description

### Field

The present invention relates to a heat pump heating system.

### Background

Disclosed in PTL 1 is a heat pump hot-water heating system according to the preamble of claim 1 including: a circulation pump configured to circulate a water heat medium between a heat source machine and an indoor radiator; and a control unit configured to control a head of the circulation pump so that a difference between the temperature of the water heat medium flowing from the heat source machine to the indoor radiator and the temperature of the water heat medium returning from the indoor radiator to the indoor radiator is in a specified range (for example, in the range of 4°C to 20°C).

EP 2 615 384 A1 discloses a heat medium circulation type heat pump heater that includes a heat pump, a heat transfer circuit, a heat utilization device, a flow regulator, and a controller. A heat medium heated by the heat pump circulates in the heat transfer circuit. The water circulation rate can be changed by an inverter pump. The controller controls the heat pump to allow the heat utilization device to produce a required heating output, and controls the flow regulator to prevent a return temperature from rising with a rise in a supply temperature.

JP 2009-287895 discloses a heat pump hot water heating system. The problem to be solved is to provide a heat pump hot water heating system improved in heat pump cycle efficiency without causing radiation amount insufficiency of an indoor radiator due to flow rate deterioration. The solution to this problem is: The heat pump hot water heating system is equipped with: a circulating pump carrying out heat exchange between a coolant of the heat pump cycle and a water heating medium by a coolant-water heat exchanger and conveying the water heating medium to the indoor radiator; a heat pump heat source machine having a control part controlling a head of the circulating pump; the indoor radiator carrying out heating by the water heating medium from the heat pump heat source machine; and an outgoing and return water temperature detection part (an outgoing water temperature sensing part and a return water temperature sensing part) detecting an outgoing return water temperature difference being a difference between an outgoing water temperature and a return water temperature of the water heating medium. The control part controls the head of the circulating pump such that the outgoing and return water temperature difference is within a predetermined range.

DE 3423262 A1 is directed to a method for regulating the capacity of a compression heat pump which, in association with a boiler, acts on a central heating installation. In this method, the heat pump is regulated depending upon the temperature of the heating return line and the boiler depending upon the temperature of the heating flow line.

### Citation List

### Patent Literature

[PTL 1] JP 2009-287895 A

### Summary

### Technical Problem

In the technology disclosed in PTL 1, sufficient enhancement of heating capacity may not be achievable when a liquid sent to an indoor-heating device has a high temperature.

The present invention has been made in order to solve the aforementioned problem, and an object of the present invention is to provide a heat pump heating system capable of enhancing heat pump efficiency and heating capacity.

### Solution to Problem

A heat pump heating system of the invention includes: a compressor configured to compress refrigerant; a heat exchanger configured to exchange heat between the refrigerant compressed by the compressor and a liquid; a pump configured to circulate the liquid between the heat exchanger and an indoor-heating device; a first temperature sensor configured to detect outgoing temperature that is temperature of the liquid to be fed to the indoor-heating device from the heat exchanger; a second temperature sensor configured to detect return temperature that is temperature of the liquid returning from the indoor-heating device to the heat exchanger; and a controller configured to control a circulation flow rate of the liquid so that a difference between the outgoing temperature and the return temperature when the outgoing temperature is higher than a threshold is equal to or less than a difference between the outgoing temperature and the return temperature when the outgoing temperature is equal to the threshold, and so that the difference between the outgoing temperature and the return temperature when the outgoing temperature is higher than the threshold is smaller as the outgoing temperature is higher.

### Advantageous Effects of Invention

According to the heat pump heating system of the present invention, it becomes possible to enhance the heat pump efficiency and the heating capacity.

Fig. 1 is a configuration diagram illustrating a heat pump heating system according to a first embodiment of the present invention.
Fig. 2 is a flowchart illustrating control actions performed by a controller in indoor-heating operation of the heat pump heating system in the first embodiment.
Fig. 3 illustrates relationship between an outgoing temperature target value and a target value of liquid temperature difference ΔTa in the first embodiment.
Fig. 4 illustrates relationship among outgoing temperature, return temperature, and the liquid temperature difference ΔTa in the first embodiment.
Fig. 5 illustrates relationship between an outgoing temperature target value and a target value of liquid temperature difference ΔTa in the second embodiment.

### Description of Embodiments

Hereinafter, embodiments of the present invention will be described with reference to the drawings. It is to be noted that like component members are designated by like reference signs to omit redundant description.

### First Embodiment

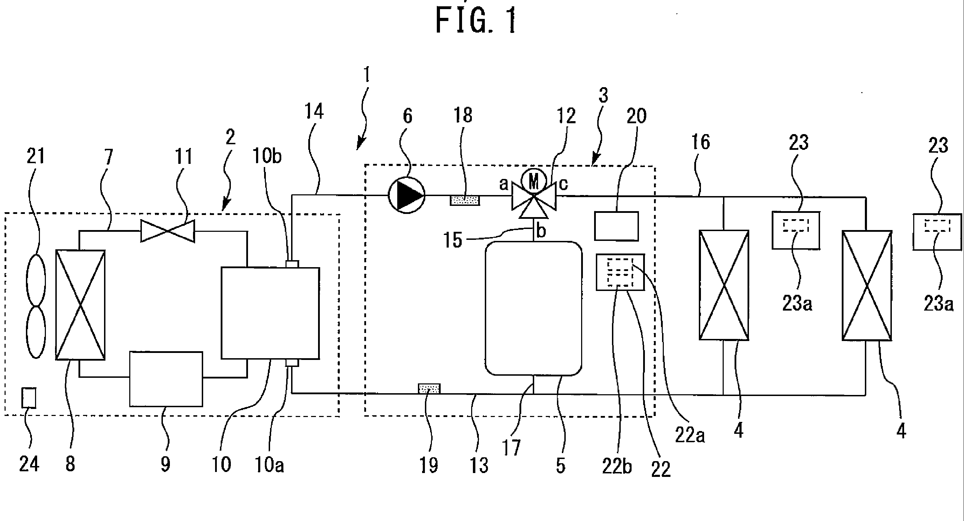

Fig. 1 is a configuration diagram illustrating a heat pump heating system according to a first embodiment of the present invention. As illustrated in Fig. 1, a heat pump heating system 1 of the first embodiment includes a heat pump heat source device 2 and a tank unit 3. The heat pump heat source device 2 heats a liquid used as a heat medium for indoor-heating with the indoor-heating device 4. Examples of the liquid include water, antifreeze solution, or brine. The indoor-heating device 4 heats a room with the heat of the liquid supplied from the heat pump heat source device 2. In Fig. 1, two indoor-heating devices 4 are connected in parallel, though the number of the indoor-heating devices 4 may be one, or three or more.

The heat pump heat source device 2 includes a heat pump cycle device 7. The heat pump cycle device 7 includes a refrigerant circuit in which an evaporator 8, a compressor 9, a primary flow channel of a refrigerant-liquid heat exchanger 10, and a refrigerant flow rate control valve 11 are annularly connected. The evaporator 8 evaporates the refrigerant by making the refrigerant absorb the heat of a low-temperature heat source. In the first embodiment, the low-temperature heat source is outside air. The evaporator 8 is configured with a heat exchanger configured to exchange heat between the refrigerant and air. The refrigerant-liquid heat exchanger 10 has the primary flow channel for passing the refrigerant, and a secondary flow channel for passing the liquid. The refrigerant-liquid heat exchanger 10 heats the liquid by exchanging heat between the refrigerant that is compressed by the compressor 9 to a high-temperature and highpressure state, and the liquid. The circulation flow rate of the refrigerant can be adjusted by adjusting opening of the refrigerant flow rate control valve 11. The heat pump heat source device 2 of the first embodiment is placed outdoors. The heat pump heat source device 2 includes a blower fan 21 configured to supply outside air to the evaporator 8, and an ambient temperature sensor 24 configured to detect outdoor temperature.

The tank unit 3 includes a tank 5 configured to store the liquid, a pump 6 configured to circulate the liquid, and a three way valve 12 configured to switch the flow channels of the liquid. The three way valve 12 has an a-port, a b-port, and a c-port. A liquid outlet of the indoor-heating device 4 is connected to an inlet 10a of the secondary flow channel of the refrigerant-liquid heat exchanger 10 through a return conduit 13. An outlet 10b of the secondary flow channel of the refrigerant-liquid heat exchanger 10 is connected to the a-port of the three way valve 12 through an outward conduit 14. The pump 6 is connected in the middle of the outward conduit 14. The b-port of the three way valve 12 is connected to an upper portion of the tank 5 through an upper conduit 15. The c-port of the three way valve 12 is connected to a liquid inlet of the indoor-heating device 4 through an outward conduit 16. A lower portion of the tank 5 is connected in the middle of the return conduit 13 through a lower conduit 17.

During indoor-heating operation, the liquid heated in the refrigerant-liquid heat exchanger 10 circulates through the outward conduit 14, the pump 6, the three way valve 12, the outward conduit 16, the indoor-heating device 4, and the return conduit 13, and returns to the refrigerant-liquid heat exchanger 10. The above circulating route corresponds to an indoor-heating circuit.

During heat accumulating operation for accumulating heat in the tank 5, the liquid in the lower portion of the tank 5 is fed to the refrigerant-liquid heat exchanger 10 through the lower conduit 17 and part of the return conduit 13, and the liquid heated in the refrigerant-liquid heat exchanger 10 returns to the upper portion of the tank 5 through the outward conduit 14, the pump 6, the three way valve 12, and the upper conduit 15. The above circulating route corresponds to a heat accumulating circuit. The indoor-heating circuit and the heat accumulating circuit can be switched by switching the flow channels of the liquid by the three way valve 12.

A first temperature sensor 18 configured to detect outgoing temperature which is the temperature of the liquid fed to the indoor-heating device 4 from the refrigerant-liquid heat exchanger 10 is provided in the middle of the outward conduit 14. A second temperature sensor 19 configured to detect return temperature which is the temperature of the liquid returning from the indoor-heating device 4 to the refrigerant-liquid heat exchanger 10 is provided in the middle of the return conduit 13.

The heat pump heating system 1 includes a controller 20. The controller 20 is configured with a microcomputer or the like, for example. The controller 20 includes: a storage unit including a ROM, a RAM, and a nonvolatile memory; a central processing unit (CPU) configured to execute arithmetic processing based on programs stored in the storage unit; and an input/output port configured to input and output external signals to/from the CPU. Various types of actuators and various types of sensors included in the heat pump heating system 1 are each electrically connected to the controller 20. The controller 20 controls operation of the heat pump heating system 1 by controlling operation of the pump 6, the compressor 9, the refrigerant flow rate control valve 11, the three way valve 12, the blower fan 21, and the like.

The pump 6 has an impeller and a motor that rotates the impeller. By rotating the impeller of the pump 6, the liquid in the indoor-heating circuit or the heat accumulating circuit can be circulated. The controller 20 can change the circulation flow rate of the liquid by changing the operation speed of the pump 6. For example, the pump 6 preferably includes a pulse width modulation-controlled (PWM-controlled) direct-current motor having rotation speed that can optionally be varied in response to a speed command voltage from the controller 20.

The tank unit 3 is placed indoors. The tank unit 3 has a main operation panel 22. The main operation panel 22 is communicably connected with the controller 20. The main operation panel 22 has a room temperature setting means 22a configured to enable a user to set a target room temperature, and an outgoing temperature setting means 22b configured to enable the user to set an outgoing temperature.

For example, at least one device, selected out of a floor heating panel placed under the floor, a radiator placed on an interior wall surface (panel heater), and a fan convector, can be used as the indoor-heating device 4. The fan convector, which includes a fan for circulation of indoor air and a heat exchanger configured to exchange heat between indoor air and liquid, performs indoor-heating with forced convection. Each indoor-heating device 4 is provided with an operation panel 23. The operation panel 23 has a room temperature detecting means 23a configured to detect room temperature. The operation panel 23 is communicably connected with the controller 20 through wired or wireless communication. Or the operation panel 23 and the main operation panel 22 may be communicably connected through wired or wireless communication. In that case, the operation panel 23 can communicate with the controller 20 through the main operation panel 22.

The indoor-heating operation of the heat pump heating system 1 in the first embodiment includes an outgoing temperature-fixed operation, a heat curve operation, and a room temperature control operation. In the case of the outgoing temperature-fixed operation, the controller 20 fixes an outgoing temperature target value to a temperature set by the outgoing temperature setting means 22b. In the case of the heat curve operation, the controller 20 has a function of setting the outgoing temperature target value in accordance with the outdoor temperature detected with the ambient temperature sensor 24. During the heat curve operation, when outdoor temperature is low, the controller 20 may set a high outgoing temperature target value on the assumption that a heating requirement is high, whereas when the outdoor temperature is high, the controller 20 may set a low outgoing temperature target value on the assumption that the heating requirement is low. In the case of the room temperature control operation, the controller 20 has a function of setting the outgoing temperature target value in response to a heating load. During the room temperature control operation, the controller 20 may set a high outgoing temperature target value when the heating load is high, whereas when the heating load is low, the controller 20 may set a low outgoing temperature target value. The controller 20 can estimate the heating load based on the target room temperature set by the room temperature setting means 22a and on the present room temperature detected by the room temperature detecting means 23a. That is, the controller 20 can estimate that the heating load is higher as a difference between the target room temperature and the present room temperature is larger. The user can select one operation out of the outgoing temperature-fixed operation, the heat curve operation, and the room temperature control operation using the main operation panel 22.

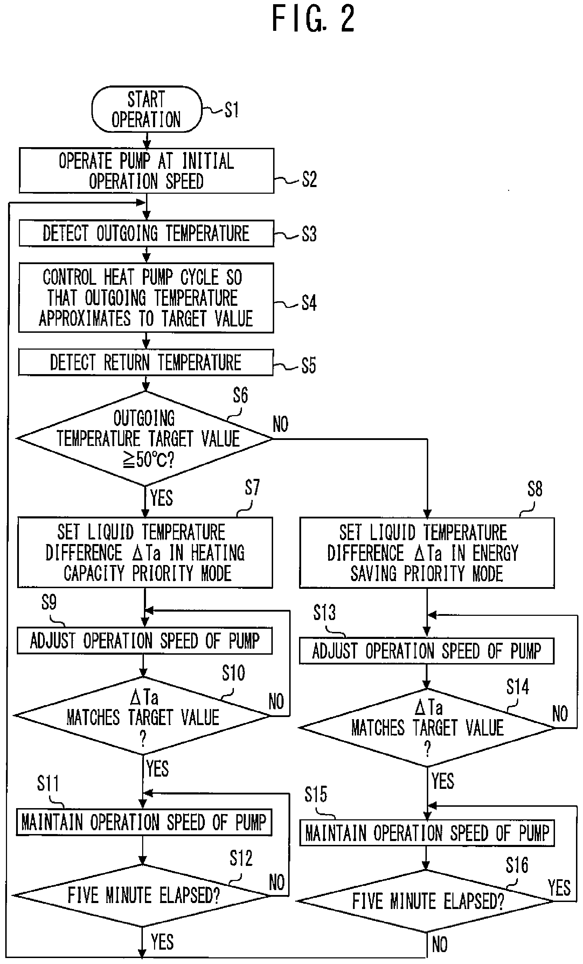

Fig. 2 is a flowchart illustrating control actions performed by the controller 20 in the indoor-heating operation of the heat pump heating system 1 in the first embodiment. In step S1 of Fig. 2, the controller 20 starts indoor-heating operation in response to an user's action to the operation panel 23 of the indoor-heating device 4. In step S1, the controller 20 receives information on the operation selected out of the outgoing temperature-fixed operation, the heat curve operation, and the room temperature control operation, and information on the target room temperature set by the room temperature setting means 22a, the present room temperature detected by the room temperature detecting means 23a, the temperature set by the outgoing temperature setting means 22b, and the outdoor temperature detected with the ambient temperature sensor 24. In step S1, if the heat accumulating circuit is formed by the three way valve 12, the controller 20 switches the three way valve 12 to form the indoor-heating circuit.

Next, in step S2, the controller 20 gives a speed command voltage so that the pump 6 is operated at an initial operation speed. The initial operation speed is stored in the controller 20 in advance. Next, in step S3, the controller 20 detects the outgoing temperature with the first temperature sensor 18. Next, in step S4, the controller 20 controls, based on the outgoing temperature detected in step S3, the heat pump cycle device 7 so that the outgoing temperature approximates to the target value. For example, the controller 20 controls one of or both the capacity of the compressor 9 and the opening of the refrigerant flow rate control valve 11 in step S4. As described before, the outgoing temperature target value in step S4 is a value set by the outgoing temperature setting means 22b in the case of the outgoing temperature-fixed operation. In the case of the heat curve operation, the outgoing temperature target value in step S4 is a value set in accordance with the outdoor temperature. In the case of the room temperature control operation, the outgoing temperature target value in step S4 is a value calculated based on the target room temperature and on the present room temperature. In the first embodiment, the outgoing temperature target value is set in the range of 35°C to 60°C. While the initial operation speed in step S2 may be a fixed value, it may be varied in accordance with the outgoing temperature target value.

The controller 20 advances processing from step S4 to step S5. In step S5, the controller 20 detects the outgoing temperature with the second temperature sensors 19. In the following description, a difference between the outgoing temperature and the return temperature is referred to as "liquid temperature difference" represented by reference sign ΔTa. Next, in step S6, the controller 20 compares the outgoing temperature target value with a threshold. In the first embodiment, the threshold is 50°C. In the present invention, the threshold may be other than 50°C. When the outgoing temperature target value is equal to or more than the threshold (50°C) in step S6, i.e., when the outgoing temperature target value is in the range of 50°C to 60°C, the controller 20 advances processing to step S7. In step S7, the controller 20 determines a heating capacity priority mode. Contrarily to this, when the outgoing temperature target value is less than the threshold (50°C) in step S6, i.e., when the outgoing temperature target value is 35°C or more and less than 50°C, the controller 20 advances processing to step S8. In step S8, the controller 20 determines an energy saving priority mode.

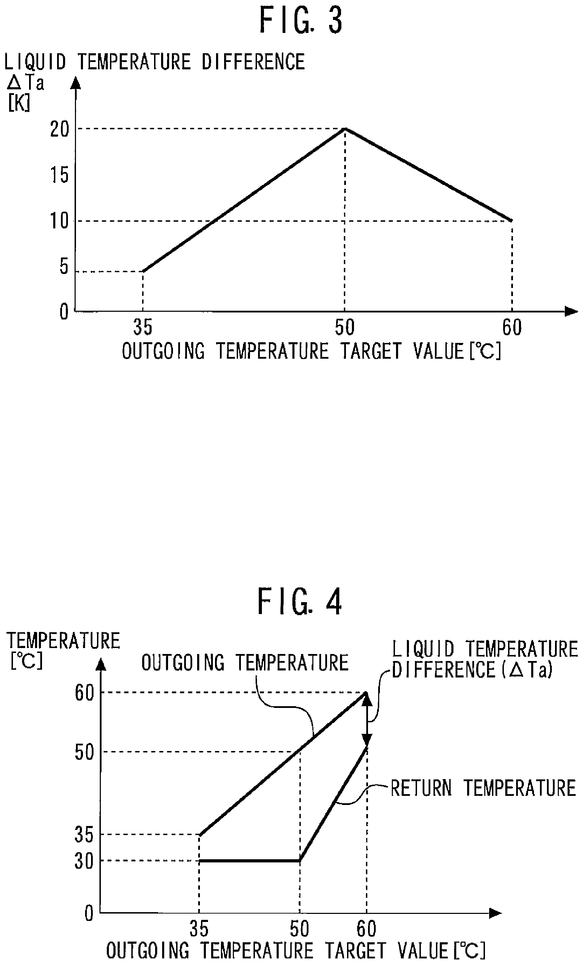

Fig. 3 illustrates relationship between the outgoing temperature target value and the target value of liquid temperature difference ΔTa in the first embodiment. The controller 20 sets the target value of liquid temperature difference ΔTa in accordance with the outgoing temperature target value based on the relationship illustrated in Fig. 3. In the following description, a unit of temperature difference is expressed by K (kelvin) to provide easy distinction between temperature and temperature difference. In the first embodiment, the relationship illustrated in Fig. 3 is as described below. The target value of liquid temperature difference ΔTa is 20 K when the outgoing temperature target value is equal to the threshold (50°C). When the outgoing temperature target value is equal to or more than the threshold (50°C), i.e., when the outgoing temperature target value is in the range of 50°C to 60°C, the target value of liquid temperature difference ΔTa is smaller as the outgoing temperature target value is higher. The target value of liquid temperature difference ΔTa is 10 K when the outgoing temperature target value is 60°C. Contrarily to this, when the outgoing temperature target value is less than the threshold (50°C), i.e., when the outgoing temperature target value is in the range of 35°C or more and less than 50°C, the target value of liquid temperature difference ΔTa is larger as the outgoing temperature target value is higher. The target value of liquid temperature difference ΔTa is 5 K when the outgoing temperature target value is 35°C.

When processing proceeds to step S7, the controller 20 executes control as described below. In step S7, the controller 20 sets the target value of liquid temperature difference ΔTa based on the relationship illustrated in Fig. 3. That is, in step S7, the controller 20 makes the target value of liquid temperature difference ΔTa smaller as the outgoing temperature target value is higher. Next, in step S9, the controller 20 compares a current liquid temperature difference ΔTa, which is detected with the first temperature sensor 18 and the second temperature sensor 19, with the target value set in step S7, and adjusts the operation speed of the pump 6 to control the circulation flow rate of the liquid. When the operation speed of the pump 6 is accelerated to increase the circulation flow rate of the liquid, the liquid temperature difference ΔTa is changed to be smaller. On the contrary, when the operation speed of the pump 6 is decelerated to decrease the circulation flow rate of the liquid, the liquid temperature difference ΔTa is changed to be larger. In step S9, when the current liquid temperature difference ΔTa is larger than the target value, the controller 20 adjusts the operation speed of the pump 6 to be faster, whereas when the current liquid temperature difference ΔTa is smaller than the target value, the controller 20 adjusts the operation speed of the pump 6 to be slower. Next, in step S10, the controller 20 detects the liquid temperature difference ΔTa again with the first temperature sensor 18 and the second temperature sensor 19, and determines whether the liquid temperature difference ΔTa matches the target value. More specifically, when the detected liquid temperature difference ΔTa is in an allowable range with respect to the target value (for example, in the range of ±1°C of the target value) in step S10, the controller 20 determines that the liquid temperature difference ΔTa matches the target value; otherwise the controller 20 determines that the liquid temperature difference ΔTa does not match target value. When the liquid temperature difference ΔTa does not match the target value in step S10, the controller 20 returns processing to step S9, and adjusts the operation speed of the pump 6 again. When the liquid temperature difference ΔTa matches the target value in step S10, the controller 20 advances processing to step S11. The controller 20 maintains a current operation speed of the pump 6 in step S11, and advances processing to step S12. In step S12, the controller 20 determines whether elapsed time in step S11 reached predetermined time (for example, 5 minutes). The controller 20 returns processing to step S3 after the elapsed time in step S11 reached the predetermined time.

When processing proceeds to step S8, the controller 20 executes control as described below. In step S8, the controller 20 sets a target value of liquid temperature difference ΔTa based on the relationship illustrated in Fig. 3. That is, in step S8, the controller 20 makes the target value of liquid temperature difference ΔTa larger as the outgoing temperature target value is higher. Next, in step S13, the controller 20 compares a current liquid temperature difference ΔTa, which is detected with the first temperature sensor 18 and the second temperature sensor 19, with the target value set in step S8, and adjusts the operation speed of the pump 6 to control the circulation flow rate of the liquid. In step S13, when the current liquid temperature difference ΔTa is larger than the target value, the controller 20 adjusts the operation speed of the pump 6 to be faster, whereas when the current liquid temperature difference ΔTa is smaller than the target value, the controller 20 adjusts the operation speed of the pump 6 to be slower. Next, in step S14, the controller 20 detects the liquid temperature difference ΔTa again with the first temperature sensor 18 and the second temperature sensor 19, and determines whether the liquid temperature difference ΔTa matches the target value. More specifically, in step S14, when the detected liquid temperature difference ΔTa is in the allowable range with respect to the target value (for example, in the range of ±1°C of the target value), the controller 20 determines that the liquid temperature difference ΔTa matches the target value; otherwise the controller 20 determines that the liquid temperature difference ΔTa does not match target value. When the liquid temperature difference ΔTa does not match the target value in step S14, the controller 20 returns processing to step S13, and adjusts the operation speed of the pump 6 again. When the liquid temperature difference ΔTa matches the target value in step S14, the controller 20 advances processing to step S15. The controller 20 maintains current operation speed of the pump 6 in step S15, and advances processing to step S16. In step S16, the controller 20 determines whether the elapsed time in step S15 reached predetermined time (for example, 5 minutes). The controller 20 returns processing to step S15 after the elapsed time in step S15 reached the predetermined time.

When the operation speed of the pump 6 is adjusted in step S9 or step S13 and thereby the circulation flow rate of the liquid changes, the outgoing temperature and the return temperature also change. When the predetermined time of step S12 or step S16 elapses, the change in the outgoing temperature and the return temperature stabilizes. Then, the processes in step S3 and in subsequent steps are executed again, so that the outgoing temperature and the liquid temperature difference ΔTa are controlled to match the target values again, respectively. By repeating the above-stated procedures, the outgoing temperature and the liquid temperature difference ΔTa can be controlled to match the target values, respectively.

As described in the foregoing, during the indoor-heating operation, the controller 20 in the first embodiment can control the circulation flow rate of the liquid so that the liquid temperature difference ΔTa when the outgoing temperature is higher than the threshold (50°C) less than the liquid temperature difference ΔTa when the outgoing temperature is equal to the threshold (50°C). When the outgoing temperature is higher than the threshold (50°C), it can be estimated that the heating requirement is high. When the outgoing temperature is high, the indoor-heating device 4 tends to take more heat from the liquid. Consequently, when the outgoing temperature is high, a temperature decrease width of the liquid in the indoor-heating device 4, i.e., the liquid temperature difference ΔTa, tends to be larger. When the liquid temperature difference ΔTa becomes larger, a mean temperature of the liquid inside the indoor-heating device 4 is lowered and thereby the heating capacity decreases. Thus, when the outgoing temperature is high, the heating capacity may decrease due to the increase in the liquid temperature difference ΔTa, although a high heating requirement can be estimated. Contrarily to this, according to the heat pump heating system 1, the liquid temperature difference ΔTa when the outgoing temperature is higher than the threshold (50°C) is set equal to or less than the liquid temperature difference ΔTa when the outgoing temperature is equal to the threshold (50°C), so that the increase in the liquid temperature difference ΔTa in the case of a high heating requirement can be prevented. As a result, the heating capacity can be enhanced when the heating requirement is high.

In the invention the liquid temperature difference ΔTa when the outgoing temperature is higher than the threshold (50°C) can be controlled to be smaller as the outgoing temperature is higher. Accordingly, as the outgoing temperature is higher, i.e., as the heating requirement is higher, the liquid temperature difference ΔTa can be made smaller, so that the heating capacity can further be enhanced.

Fig. 4 illustrates relationship among the outgoing temperature, the return temperature, and the liquid temperature difference ΔTa in the first embodiment. The relationship of Fig. 4 corresponds to the relationship of Fig. 3. As the return temperature is lower, coefficient of performance (COP) indicating heat pump efficiency is larger. According to the heat pump heating system 1, when the outgoing temperature is lower than the threshold (50°C), i.e., when the heating requirement is relatively low, the return temperature can sufficiently be lowered by securing a sufficiently large liquid temperature difference ΔTa. As a result, the heat pump efficiency can be enhanced. In the first embodiment in particular, the liquid temperature difference ΔTa when the outgoing temperature is lower than the threshold (50°C) can be controlled to be larger as the outgoing temperature is higher. Accordingly, as illustrated in Fig. 4, when the outgoing temperature is lower than the threshold (50°C), i.e., when the heating requirement is relatively low, the return temperature can be kept low with more reliability. As a result, the heat pump efficiency can further be enhanced. As illustrated in Fig. 4, in the first embodiment, when the outgoing temperature is lower than the threshold (50°C), the return temperature can be controlled to be constant (30°C) regardless of the outgoing temperature.

In the first embodiment, the return temperature when the outgoing temperature is 60°C is 50°C. That is to say, an upper limit of the return temperature is 50°C. When the return temperature is too high, the refrigerant condensation temperature may increase to cause the pressure of the refrigerant to be higher. In view of this point, it is preferable to properly adjust the upper limit of the return temperature in accordance with the type of the refrigerant, the configuration of the refrigerant circuit, and the like.

As illustrated in Fig. 3, in the first embodiment, when the outgoing temperature is equal to the threshold (50°C), the liquid temperature difference ΔTa takes a maximum value (20 K), whereas when the outgoing temperature is equal to the lower limit (35°C), the liquid temperature difference ΔTa takes a minimum value (5 K). The maximum value and the minimum value of the liquid temperature difference ΔTa are preferably determined in accordance with radiation characteristics of the indoor-heating device 4. The maximum value and the minimum value of the liquid temperature difference ΔTa in the first embodiment can be used for various types of indoor-heating devices 4. When the type of the indoor-heating device 4 to be used is limited, the maximum value and the minimum value of the liquid temperature difference ΔTa may be set at optimum values in accordance with the radiation characteristics of the indoor-heating device 4.

As the refrigerant of the heat pump cycle device 7, refrigerants, such as carbon dioxide, which can utilize a region exceeding critical temperature, that is, a supercritical region, can be used. In the case of using the refrigerants, such as carbon dioxide, which can utilize the supercritical region, heat pump efficiency and heating capacity can be enhanced by executing control according to the first embodiment. Systems using circulation of use-side liquid typically have a relatively high return temperature. Due to the characteristics of the carbon dioxide refrigerant, there is a problem that the COP tends to decrease when the liquid temperature difference ΔTa is small. As a solution to the problem, according to the first embodiment, the liquid temperature difference ΔTa is controlled to be larger in the energy saving priority mode, so that the COP can be enhanced, and the liquid temperature difference ΔTa is controlled to be smaller in the heating capacity priority mode, so that the heating capacity can be enhanced. Thus, both the enhancement in the heat pump efficiency and the enhancement in the heating capacity can be achieved.

In the first embodiment, as illustrated in Fig. 3, a linear relationship is established between the outgoing temperature target value and the target value of liquid temperature difference ΔTa in the range where the outgoing temperature target value is higher than the threshold (50°C). Without being limited to such a configuration, the relationship between the outgoing temperature target value and the target value of liquid temperature difference ΔTa in the range where the outgoing temperature target value is higher than the threshold may be a curved or stepwise relationship in the present invention.

In the first embodiment, as illustrated in Fig. 3, a linear relationship is established between the outgoing temperature target value and the target value of liquid temperature difference ΔTa in the range where the outgoing temperature target value is lower than the threshold (50°C). Without being limited to such a configuration, the relationship between the outgoing temperature target value and the target value of liquid temperature difference ΔTa in the range where the outgoing temperature target value is lower than the threshold may be a curved or stepwise relationship in the present invention.

### Second Embodiment

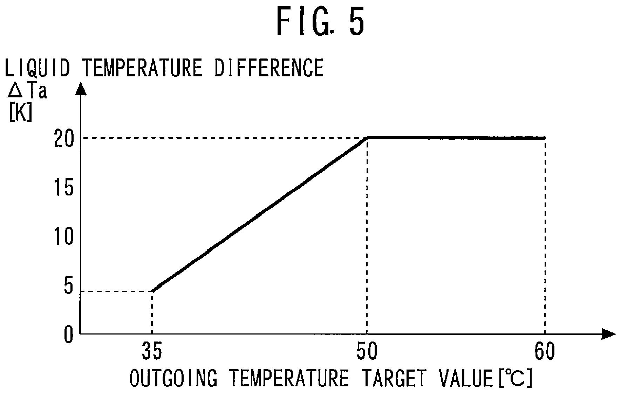

A description is now given of a second embodiment of the present invention with reference to Fig. 5. The main focus of the description is on a difference from the first embodiment described in the foregoing, and identical or corresponding component members are designated by identical reference signs to omit the description thereof. Fig. 5 illustrates relationship between an outgoing temperature target value and a target value of liquid temperature difference ΔTa in the second embodiment. In the second embodiment, a controller 20 sets a target value of the liquid temperature difference ΔTa based on relationship illustrated in Fig. 5 in place of the relationship illustrated in Fig. 3 at the time of indoor-heating operation.

As illustrated in Fig. 5, in the second embodiment, the controller 20 controls the circulation flow rate of the liquid so that the liquid temperature difference ΔTa when the outgoing temperature is higher than the threshold (50°C) is equal to the liquid temperature difference ΔTa when the outgoing temperature is equal to the threshold (50°C). In the second embodiment, when the outgoing temperature is higher than the threshold (50°C), the controller 20 executes control so that the liquid temperature difference ΔTa is constant (20 K) regardless of the outgoing temperature. According to the second embodiment, the liquid temperature difference ΔTa when the outgoing temperature is higher than the threshold (50°C) is set equal to the liquid temperature difference ΔTa when the outgoing temperature is equal to the threshold (50°C), so that the increase in the liquid temperature difference ΔTa in the case of a high heating requirement can be prevented. As a result, the heating capacity can be enhanced when the heating requirement is high. Moreover, when the outgoing temperature is lower than the threshold (50°C), i.e., when the heating requirement is relatively low, the return temperature can sufficiently be lowered by securing a sufficiently large liquid temperature difference ΔTa. As a result, the heat pump efficiency can be enhanced.

### Reference Signs List

- 1: heat pump heating system
- 2: heat pump heat source device
- 3: tank unit
- 4: indoor-heating device
- 5: tank
- 6: pump
- 7: heat pump cycle device
- 8: evaporator
- 9: compressor
- 10: refrigerant-liquid heat exchanger
- 10a: inlet
- 10b: outlet
- 11: refrigerant flow rate control valve
- 12: three way valve
- 13: return conduit
- 14: outward conduit
- 15: upper conduit
- 16: outward conduit
- 17: lower conduit
- 18: first temperature sensor
- 19: second temperature sensor
- 20: controller
- 21: blower fan
- 22: main operation panel
- 22a: room temperature setting means
- 22b: outgoing temperature setting means
- 23: operation panel
- 23a: room temperature detecting means
- 24: ambient temperature sensor

## Claims

1. A heat pump heating system (1), comprising:
a compressor (9) configured to compress refrigerant;
a heat exchanger (10) configured to exchange heat between the refrigerant compressed by the compressor (9) and a liquid;
a pump (6) configured to circulate the liquid between the heat exchanger (10) and an indoor-heating device (4);
a first temperature sensor (18) configured to detect outgoing temperature that is temperature of the liquid to be fed to the indoor-heating device (4) from the heat exchanger (10);
a second temperature sensor (19) configured to detect return temperature that is temperature of the liquid returning from the indoor-heating device (4) to the heat exchanger (10); and
a controller (20) ; **characterized in that** the controller (20) is configured to control a circulation flow rate of the liquid so that a difference between the outgoing temperature and the return temperature when the outgoing temperature is higher than a threshold is equal to or less than a difference between the outgoing temperature and the return temperature when the outgoing temperature is equal to the threshold, and so that the difference between the outgoing temperature and the return temperature when the outgoing temperature is higher than the threshold is smaller as the outgoing temperature is higher.

2. The heat pump heating system (1) according to claim 1, wherein the controller (20) is configured to control the circulation flow rate of the liquid so that the difference between the outgoing temperature and the return temperature when the outgoing temperature is lower than the threshold is larger as the outgoing temperature is higher.

3. The heat pump heating system (1) according to claim 1 or 2, further comprising:
room temperature detecting means (23a) for detecting room temperature; and
means (20) for setting a target value of the outgoing temperature based on a difference between a target room temperature and a present room temperature detected by the room temperature detecting means (23a).

4. The heat pump heating system (1) according to any one of claims 1 to 3, wherein the refrigerant is carbon dioxide.

## Patentansprüche

1. Wärmepumpenerwärmungssystem (1), umfassend:
einen Verdichter (9), der eingerichtet ist, Kältemittel zu verdichten;
einen Wärmetauscher (10), der eingerichtet ist, Wärme zwischen dem durch den Verdichter (9) verdichteten Kältemittel und einer Flüssigkeit auszutauschen;
eine Pumpe (6), die eingerichtet ist, die Flüssigkeit zwischen dem Wärmetauscher (10) und einer Innenraumerwärmungseinrichtung (4) zu zirkulieren;
einen ersten Temperatursensor (18), der eingerichtet ist, die Austrittstemperatur, die die Temperatur der Flüssigkeit ist, die der Innenraumerwärmungseinrichtung (4) vom Wärmetauscher (10) zuzuführen ist, zu erfassen;
einen zweiten Temperatursensor (19), der eingerichtet ist, die Rücklauftemperatur, die die Temperatur der Flüssigkeit ist, die von der Innenraumerwärmungseinrichtung (4) zum Wärmetauscher (10) zurücckehrt, zu erfassen; und
eine Steuereinheit (20);
**dadurch gekennzeichnet, dass**
die Steuereinheit (20) eingerichtet ist, eine Zirkulationsflußrate der Flüssigkeit zu steuern, so dass eine Differenz zwischen der Austrittstemperatur und der Rücklauftemperatur, wenn die Austrittstemperatur höher ist als ein Schwellenwert, gleich ist wie oder kleiner ist als eine Differenz zwischen der Austrittstemperatur und der Rücklauftemperatur, wenn die Austrittstemperatur gleich ist wie der Schwellenwert, und so dass die Differenz zwischen der Austrittstemperatur und der Rücklauftemperatur, wenn die Austrittstemperatur höher ist als der Schwellenwert, mit steigender Austrittstemperatur kleiner ist.

2. Wärmepumpenerwärmungssystem (1) nach Anspruch 1, wobei
die Steuereinheit (20) eingerichtet ist, die Zirkulationsflußrate der Flüssigkeit zu steuern, so dass die Differenz zwischen der Austrittstemperatur und der Rücklauftemperatur, wenn die Austrittstemperatur niedriger ist als der Schwellenwert, mit steigender Austrittstemperatur größer ist.

3. Wärmepumpenerwärmungssystem (1) nach Anspruch 1 oder 2, ferner umfassend:
ein Raumtemperaturerfassungsmittel (23a) zum Erfassen einer Raumtemperatur; und
ein Mittel (20) zum Einstellen eines Zielwerts der Austrittstemperatur basierend auf einer Differenz zwischen einer Zielraumtemperatur und einer durch das Raumtemperaturerfassungsmittel (23a) erfassten aktuellen Raumtemperatur.

4. Wärmepumpenerwärmungssystem (1) nach einem der Ansprüche 1 bis 3, wobei das Kältemittel Kohlendioxid ist.

## Revendications

1. Système de chauffage à pompe à chaleur (1), comprenant :
un compresseur (9) configuré pour comprimer un fluide frigorigène ;
un échangeur de chaleur (10) configuré pour échanger de la chaleur entre le fluide frigorigène comprimé par le compresseur (9) et un liquide ;
une pompe (6) configurée pour faire circuler le liquide entre l'échangeur de chaleur (10) et un dispositif de chauffage d'intérieur (4) ;
un premier capteur de température (18) configuré pour détecter la température de sortie à savoir la température du liquide devant être transmis au dispositif de chauffage d'intérieur (4) par l'échangeur de chaleur (10) ;
un second capteur de température (19) configuré pour détecter une température de retour, à savoir une température du liquide revenant du dispositif de chauffage d'intérieur (4) vers l'échangeur de chaleur (10) ; et
un dispositif de contrôle (20) ; **caractérisé en ce que** le dispositif de contrôle (20) est configuré pour contrôler un débit de circulation du liquide de telle sorte qu'une différence entre la température de sortie et la température de retour lorsque la température de sortie est plus élevée qu'un seuil est inférieure ou égale à une différence entre la température de sortie et la température de retour lorsque la température de sortie est égale au seuil, et de telle sorte que la différence entre la température de sortie et la température de retour lorsque la température de sortie est plus élevée qu'un seuil est plus petite alors que la température de sortie est plus élevée.

2. Système de chauffage à pompe à chaleur (1) selon la revendication 1, dans lequel
le dispositif de contrôle (20) est configuré pour contrôler le débit de circulation du liquide de telle sorte que la différence entre la température de sortie et la température de retour lorsque la température de sortie est plus basse que le seuil est plus grande alors que la température de sortie est plus élevée.

3. Système de chauffage à pompe à chaleur (1) selon la revendication 1 ou 2, comprenant en outre :
des moyens de détection de température ambiante (23a) pour détecter une température ambiante ; et
des moyens (20) pour définir une valeur cible de la température de sortie sur la base d'une différence entre une température ambiante cible et une température ambiante actuelle détectée par les moyens de détection de température ambiante (23a).

4. Système de chauffage à pompe à chaleur (1) selon l'une quelconque des revendications 1 à 3, dans lequel le fluide frigorigène est du dioxyde de carbone.
